Europäisches Patentamt

European Patent Office

Office européen des brevets

(11) Veröffentlichungsnummer: **0 260 417**
**A2**

(12) # EUROPÄISCHE PATENTANMELDUNG

(21) Anmeldenummer: 87111022.7

(51) Int. Cl.4: **C03B 37/018**

(22) Anmeldetag: 30.07.87

(30) Priorität: 02.08.86 DE 3626276

(43) Veröffentlichungstag der Anmeldung:
**23.03.88 Patentblatt 88/12**

(84) Benannte Vertragsstaaten:
**CH DE FR GB IT LI NL SE**

(71) Anmelder: **AEG KABEL Aktiengesellschaft**
**Bonnenbroicher Strasse 2-14**
**D-4050 Mönchengladbach 2(DE)**

(84) **CH DE FR GB IT LI NL SE**

(71) Anmelder: **Schott Glaswerke**
**Hattenbergstrasse 10**
**D-6500 Mainz(DE)**

(84) **CH DE FR GB IT LI NL SE**

(71) Anmelder: **Carl-Zeiss-Stiftung trading as**
**SCHOTT GLASWERKE**
**Hattenbergstrasse 10**
**D-6500 Mainz 1(DE)**

(84) **GB**

(72) Erfinder: **Heitmann, Walter, Dr.-Ing.**
**Freiherr-vom-Stein-Str.41**
**D-6101 Gross-Bieberau(DE)**

(74) Vertreter: **Langer, Karl-Heinz, Dipl.-Ing.**
**Licentia Patent-Verwaltungs-GmbH**
**Theodor-Stern-Kai 1**
**D-6000 Frankfurt/Main 70(DE)**

(54) **Verfahren zur Herstellung von Vorformen für Lichtleitfasern.**

(57) Die Erfindung betrifft ein Verfahren zur Herstellung von Vorformen für Lichtleitfasern. Ein Gasgemisch durchströmt ein erhitztes rotierendes Quarzrohr. Zur chemischen Aktivierung des Gasgemisches und der Rohrinnenwand wird in die Reaktionszone UV-Strahlung fokussiert. Die Wellenlänge der UV-Strahlung ist kleiner als 400 nm. Durch die Einstrahlung der UV-Strahlung kann mit deutlich verringerter Temperatur gearbeitet werden. Weiterhin ist es möglich, bei Atmosphärendruck sowie ohne Pumpanlage zu arbeiten. In Fig. 3 ist ein Ausführungsbeispiel dargestellt.

Fig. 3

## Verfahren zur Herstellung von Vorformen für Lichtleitfasern

Die Erfindung betrifft ein Verfahren zur Herstellung von Vorformen für Lichtleitfasern gemäß dem Oberbegriff des Hauptanspruchs.

In der optischen Nachrichtentechnik werden als Übertragungsmedium überwiegend auf Quarzglasbasis hergestellte Lichtleitfasern eingesetzt. Die Lichtleitfasern werden aus Vorformen gezogen, für deren Herstellung eine Reihe von Verfahren entwickelt worden ist, die unter anderem in Khoe, G.D., Lydtin, H.: European Optical Fibres and Passive Components: Status and Trend. Special Issue of the IEEE Journal "Broadband Communication Systems", July 1986 beschrieben sind.

Am häufigsten eingesetzt wird das in den Schutzrechten US 3.659.915, US 3.711.262, US 3.823.995 und US 3.844.550 beschriebene MCVD-Verfahren.

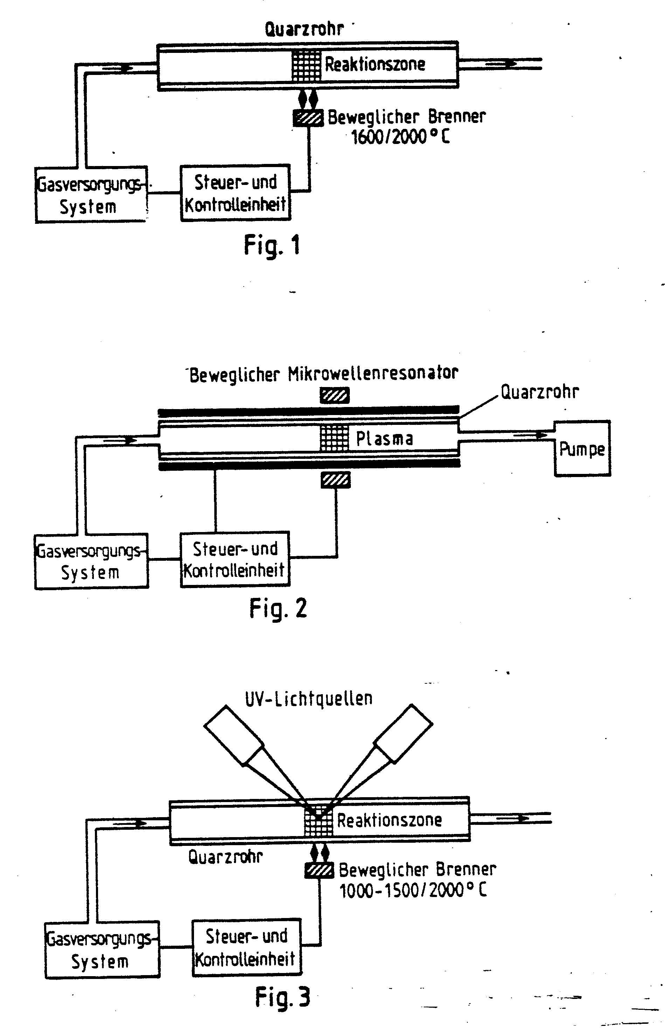

Fig. 1 zeigt schematisch die Herstellung von Vorformen nach dem MCVD-Verfahren. Ein Gasgemisch aus Sauerstoff und Chloriden - z. B. $SiCl_4$ und $GeCl_4$ -durchströmt ein rotierendes Quarzrohr, welches von außen mit einem Brenner auf etwa 1600°C erhitzt wird. In der Reaktionszone reagiert der Sauerstoff mit den Chloriden und es wird eine dünne hochreine Glasschicht an der Innenwand des Quarzrohres niedergeschlagen. Der Brenner fährt am Rohr in Durchflußrichtung entlang und kehrt am Rohrende um und fährt schnell an den Anfang zurück, worauf der nächste Durchlauf beginnt. Auf diese Weise wird eine große Anzahl von Schichten auf der Innenwand des Rohres niedergeschlagen. Wenn bei entsprechender Dotierung die notwendige Zahl von Schichten mit der geforderten Brechzahlverteilung aufgebracht ist, wird das Rohr kollabiert. Dazu wird die Brennertemperatur auf etwa 2000°C erhöht und das Rohr zu einem massiven Stab - der Vorform - zusammengeschmolzen.

Nachteilig am MCVD-Verfahren ist, daß die Reaktionen nicht vollständig ablaufen und daß je nach Abscheidungsbedingungen und verwendeten Chloriden nur zwischen 10 % und 50 % der Chloride in Oxyde umgewandelt werden. Dadurch erhöhen sich die Verfahrenskosten, zumal die erforderlichen hochreinen Chloride teuer sind.

Ein weiterer Nachteil des MCVD-Verfahrens ist die hohe Reaktionstemperatur von etwa 1600°C an der Innenwand des Trägerrohres, die erforderlich ist, um dichte glasige Schichten abzuschneiden. Bei dieser hohen Temperatur besteht die Gefahr, daß sich das Quarzrohr deformiert und die Geometrie der Vorform und damit auch die der daraus gezogenen Fasern unregelmäßig wird.

Bei größeren Vorformen für möglichst gleichmäßige große Faserlängen - 100 km und mehr - sind dem MCVD-Verfahren enge Grenzen gesetzt, weil mit zunehmender Dichte des an der Innenwand niedergeschlagenen Glases die Außentemperatur des Rohres immer weiter erhöht werden muß. Bei dem Prozeß ist es erforderlich, die Temperatur an der Innenwand konstant zu halten. Mit wachsender Wandstärke muß dann die Außentemperatur des Trägerrohres wegen der geringen Wärmeleitfähigkeit von Quarzglas derart erhöht werden, daß Verdampfung und Rohrverformung unvermeidbar werden. Eine Weiterentwicklung des MCVD-Verfahrens, bei der die Nachteile des MCVD-Verfahrens vermieden werden, ist das PCVD-Verfahren. Dieses Verfahren ist in der DE-AS 24 44 100 beschrieben. Fig. 2 zeigt im Schema das PCVD-Verfahren. Bei diesem Verfahren wird mit einem Druck von 10 - 20 mbar im Quarzrohr gearbeitet. Ein langer Rohrofen erhitzt das gesamte Quarzrohr auf etwa 1200°C. Ein schmaler Bereich des Rohres befindet sich in einem beweglichen Mikrowellenresonator, der mit einer Leistung von einigen kW ein Plasma in der Reaktionszone erzeugt. In diesem Plasma findet eine fast 100-prozentige Umwandlung der Chloride in Oxyde statt, die sich als sehr dünne glasige Schichten auf der Rohrinnenwand niederschlagen. Ähnlich wie der Brenner beim MCVD-Verfahren fährt beim PCVD-Verfahren der Mikrowellenresonator viele Male am Rohr entlang und baut so viele Schichten übereinander auf. Das Prinzip des PCVD-Verfahrens beruht also darauf, daß man dem Sauerstoff-Chlorid-Gemisch weit unterhalb der Temperatur, bei der eine thermische Reaktion stattfindet, über eine intensive Mikrowellenregung in einer Niederdruck-Gasentladung soviel zusätzliche Energie zuführt, daß eine fast vollständige Reaktion stattfindet.

Nachteilig am PCVD-Verfahren ist der relativ große Aufwand. Zusätzlich zum Rohrofen wird ein starker Mikrowellengenerator und ein beweglicher Mikrowellenresonator benötigt. Außerdem ist eine leistungsfähige Pumpanlage für korrosive Gase erforderlich. Mit dem Rohrofen kann eine gleichmäßige Temperatur der Rohrinnenwand unabhängig von der Wandstärke erreicht werden. Da auch das Mikrowellenplasma von der Dicke des Quarzrohres praktisch nicht beeinflußt wird, ermöglicht das PCVD-Verfahren auch die Herstellung sehr großer Vorformen. Allerdings kann die Vorform nicht direkt in der PCVD-Anlage kollabiert werden, weil mit einem Rohrofen die erforderliche Temperatur nicht erreicht werden kann. Zum Kollabieren ist ein weiterer kostspieliger Verfahrensschritt notwendig. Das Rohr muß in eine zusätzliche Anlage umgesetzt und dort durch Erhitzung mit einem weiteren Brenner kollabiert werden. Dabei besteht die Gefahr, daß Verunreinigungen in das Rohrinnere gelangen, die zu erhöhten Faserverlusten führen. Dieser Nachteil des PCVD-Verfahrens ist nicht vermeidbar, da aus konstruktiven Gründen um einen Brenner herum kein geschlossener Mikrowellenresonator aufgebaut werden kann.

Die der Erfindung zugrunde liegende Aufgabe, Vorformen für Lichtleitfasern ohne die dem MCVD- und PCVD-Verfahren anhaftenden Nachteile herzustellen, wird durch die im Hauptanspruch gekennzeichnete Erfindung gelöst.

Vorteilhafte Weiterbildungen der Erfindung sind in den Unteransprüchen gekennzeichnet. Der mit der Erfindung erzielbare Vorteil besteht insbesondere darin, daß in der Reaktionsphase mit deutlich verringerter Temperatur (1000 - 1500°C) und bei Atmosphärendruck sowie ohne Pumpanlage gearbeitet wird.

Die Erfindung wird anhand von einem in der Fig. 3 dargestellten Ausführungsbeispiel näher beschrieben.

Fig. 3 zeigt eine schematische Darstellung der Erfindung.

Zusätzlich zu dem Brenner beim MCVD-Verfahren (Fig. 1) sind auf der beweglichen Grundplatte zwei UV-Lichtquellen montiert, von denen hohe Lichtleistungen in die Reaktionszone eingestrahlt werden. Die Innenwand des Quarzrohres wird bei dem Verfahren nach der Erfindung durch einen Brenner in der Reaktionszone auf eine bei 1000 - 1500°C liegende Temperatur erhitzt. Diese Temperatur liegt um einige 100°C unter der thermischen Reaktionstemperatur. Durch das Quarzrohr hindurch wird zusätzlich von einer oder mehreren Strahlungsquellen UV-Strahlung in der Größenordnung von 10 - 1000 W eingestrahlt und dadurch das Gasgemisch in der Reaktionszone angeregt und teilweise ionisiert. Die UV-Strahlungsleistung und die spektrale Ver Verteilung der UV-Strahlung sind so gewählt, daß eine möglichst vollständige Reaktion stattfindet.

Leistungsfähige UV-Lichtquellen werden aus Hochdruckgasentladungslampen (Quecksilber, Quecksilber-Xenon, Xenon) mit elliptischen Reflektoren aufgebaut. Lampen mit relativ kleinen Abmessungen ermöglichen die Fokussierung von etwa 100 W Lichtleistung in ein kleines Volumen. Auch Laser (Argon-Fluor, Stickstoff) sind als starke UV-Lichtquellen einsetzbar. Niederdruck-Gasentladungslampen mit Wasserstoff oder Deuterium sind als UV-Lichtquellen mittlerer Leistung mit besonders kurzwelliger energiereicher UV-Strahlung verwendbar.

Die Wirksamkeit von UV-Strahlung bei der Herstellung stöchiometrischer Oxydschichten in der Aufdampftechnik ist aus Bradford, A. P., Hass, G., McFarland, M., Ritter, E.: Effect of Ultraviolett Irradiation on the Optical Properties of Silicon Oxide Films, Applied Optics 4 (1965) 8, S. 971 - 976 bekannt.

Beim reaktiven Aufdampfen von SiO in einer Sauerstoff-Restgasathmosphäre entstehen Schichten mit der ungefähren Zusammensetzung von $Si_2O_3$. Diese Schichten unterscheiden sich von S i$O_2$-Schichten durch eine höhere Brechzahl und starke UV-Absorption. Durch UV-Bestrahlung mit einer Quecksilber-Hochdrucklampe mit relativ geringer Intensität lassen sich die Schichten vollständig in $SiO_2$-Schichten mit der Brechzahl von Quarzglas umwandeln, die bis 200 nm absorptionsfrei sind. Wenn bei der Entstehung von Quarzglas oder anderen Oxydschichten UV-Strahlung hoher Intensität in die Reaktionszone eingestrahlt wird, erfolgt durch Photodissoziation und durch Anregung der Atome und Moleküle im Gasgemisch und an der Rohr-Innenwand die Abscheidung mit hohen Wirkungsgrad und bei reduzierter Wandtemperatur. Durch die unterschiedliche Wellenlänge der Strahlung verschiedener Lampentypen oder Laser stehen zusätzliche von der Temperatur unabhängige Parameter zur Verfügung, mit denen der Prozeßablauf und die Schichteigenschaften beeinflußt werden können. Neben der Einstrahlung von kontinuierlicher Lichtleistung werden erfindungsgemäß auch gepulste UV-Lichtquellen angewendet. Sowohl bei Hochdruck-Gasentladungslampen als auch bei Lasern sind sehr hohe Pulsleistungen erreichbar.

Da der Brenner und die UV-Lichtquellen gemeinsam auf einem beweglichen Schlitten montiert und am Rohr entlanggefahren werden, ist sowohl das Niederschlagen der Schichten als auch das Kollabieren des Rohres in einer Apparatur möglich. Die UV-Strahlung wird durch das Quarzrohr nicht oder nur wenig absorbiert. Daher läßt sich - in Verbindung mit einer Nachregelung der Lichtleistung - in der Reaktionszone eine konstante Strahlungsdichte aufrecht erhalten. Durch die erheblich niedrigere Reaktionstemperatur können mit dem Verfahren nach der Erfindung auch sehr große Vorformen hergestellt werden.

## Ansprüche

1. Verfahren zur Herstellung von Vorformen für Lichtleitfasern, bei dem ein Gasgemisch ein erhitztes rotierendes Quarzrohr durchströmt, dadurch gekennzeichnet, daß zur chemischen Aktivierung des Gasgemisches und der Innenwand des Quarzrohres in die Reaktionszone UV-Strahlung eingestrahlt wird.

2. Verfahren nach Anspruch 1, dadurch gekennzeichnet, daß die Wellenlänge der UV-Strahlung kleiner als 400 nm ist.

3. Verfahren nach Anspruch 1, dadurch gekennzeichnet, daß die Quelle der UV-Strahlung mindestens eine Hochdruckgasentladungslampe ist.

4. Verfahren nach Anspruch 1, dadurch gekennzeichnet, daß die Quelle der UV-Strahlung mindestens eine Niederdruckgasentladungslampe ist.

5. Verfahren nach Anspruch 1, dadurch gekennzeichnet, daß die Quelle der UV-Strahlung ein Laser ist.

6. Verfahren nach Anspruch 1, dadurch gekennzeichnet, daß die Quelle der UV-Strahlung gepulst ist.

0 260 417

Quarzrohr

Reaktionszone

Beweglicher Brenner
1600/2000 °C

Gasversorgungs-
System

Steuer- und
Kontrolleinheit

Fig. 1

Beweglicher Mikrowellenresonator

Quarzrohr

Plasma

Pumpe

Gasversorgungs-
System

Steuer- und
Kontrolleinheit

Fig. 2

UV-Lichtquellen

Reaktionszone

Quarzrohr

Beweglicher Brenner
1000-1500/2000 °C

Gasversorgungs-
System

Steuer- und
Kontrolleinheit

Fig. 3